# EUROPÄISCHE PATENTSCHRIFT

(11) **EP 2 396 356 B1**
(45) Veröffentlichungstag und Bekanntmachung des Hinweises auf die Patenterteilung: **16.10.2013**
(21) Anmeldenummer: 10702610.6
(22) Anmeldetag: 30.01.2010
(51) Int. Cl.: C08G 18/08, C08G 18/67, C08F 283/01, C08G 18/10, C08G 18/66, C08G 18/72, C08G 18/75, C08G 18/79, C09D 175/16, C08G 18/42

(54) **WÄSSRIGE BESCHICHTUNGSSYSTEME AUF BASIS PHYSIKALISCH TROCKNENDER URETHANACRYLATE**
AQUEOUS COATING SYSTEMS ON THE BASIS OF PHYSICALLY DRYING URETHANE ACRYLATES
SYSTÈMES DE REVÊTEMENT AQUEUX À BASE D'ACRYLATES D'URÉTHANE PHYSIQUEMENT SICCATIFS

(30) Priorität: 13.02.2009 DE 102009008950
(43) Veröffentlichungstag der Anmeldung: 21.12.2011
(73) Patentinhaber: Bayer Intellectual Property GmbH, 40789 Monheim (DE)
(72) Erfinder: SOMMER, Stefan, 51375 Leverkusen (DE); BLUM, Harald, 97840 Hafenlohr (DE); LIPPEMEIER, Jürgen, 51147 Köln (DE); FERNANDEZ, Miguel, E-08018 Barcelona (ES)
(74) Vertreter: BIP Patents
(86) Internationale Anmeldenummer: PCT/EP2010/000567
(87) Internationale Veröffentlichungsnummer: WO 2010/091797

(56) Entgegenhaltungen:
- EP-A2- 0 704 469
- WO-A1-2008/098972
- DE-A1- 19 934 763
- DE-C1- 19 746 327

## Beschreibung

Die vorliegende Erfindung beschreibt strahlungshärtbare Beschichtungssysteme auf Basis wässriger Polyurethandispersionen, ein Verfahren zu deren Herstellung, die Verwendung der Beschichtungssysteme als Lacke und / oder Klebstoffe sowie Gegenstände und Substrate, versehen mit diesen Lacken und / oder Klebstoffen.

Strahlungshärtbare, wässrige Beschichtungssysteme auf Basis von Polyurethanpolymeren finden Anwendung in der Beschichtung unter anderem von Holz, Kunststoffen und Leder und zeichnen sich durch eine Vielzahl positiver Eigenschaften, wie guter Chemikalienbeständigkeit und mechanische Stabilität, aus. Ein besonderer Vorteil ist die sekundenschnelle Aushärtung der Polyurethandeckschicht durch Quervemetzung der im Polymer enthaltenen ethylenischen Doppelbindungen mit Hilfe energiereicher Strahlung.

Für viele Anwendungen, wie z. B. bei der Holz-/Möbel- oder der Kunststofflackierung, spielt eine starke physikalische Antrocknung nach dem Ablüften des Wassers und vor der Strahlenhärtung eine außerordentlich wichtige Rolle. So können Beschichtungen, die nach Ablüften des Wassers griff- und blockfest und noch nicht strahlengehärtet sind, bereits geschliffen, gestapelt und in vielfältiger Weise mechanisch belastet werden.

Für pigmentierte Lacke ergibt sich ein weiterer, bedeutender Vorteil, wenn die Beschichtungen auch im nicht strahlengehärteten Zustand bereits griff- und blockfest sind. Pigmente, wie z. B. Titandioxid, streuen und absorbieren UV-Strahlung und können bei hohem Pigmentgehalt dafür sorgen, dass die strahlungsinduzierte Polymerisation in tieferen Lackschichten unvollständig verläuft. Bei Systemen, die vor Strahlungshärtung noch klebrig sind, führt dies dazu, dass sich nach Strahlenhärtung eine weiche bzw. noch zähflüssige Schicht unter der gehärteten, oberen Schicht befindet. Eine schlechte Haftung zum Substrat und schlechte Beständigkeiten gegenüber Chemikalien und färbende Agenzien sind die Folge. Ist die untere Schicht eines Pigmentlackes trotz ungenügender Strahlenhärtung per se fest und nicht klebrig, werden sowohl Haftung als auch Beständigkeiten besser.

Die Anforderungen an moderne Beschichtungssysteme sind sehr vielfältig. So ist es nicht nur von Vorteil, wenn strahlenhärtbare Beschichtungssysteme nach physikalischer Trocknung block- und grifffest sind, vielmehr sollte nach Strahlenhärtung ein Film erhalten werden, der sich durch hohe chemische Beständigkeiten und gute mechanische Belastbarkeit auszeichnet.

In DE-A 2912574 werden mit Acrylgruppen terminierte, wasserdispergierbare Urethanoligomere beschrieben, die aufgebaut sind aus Polyisocyanaten, Di- oder Trimethylolcarbonsäuren, Polytetramethylendiolen, Polycaprolactonpolyolen und monohydroxyfunktionellen Acrylaten. Verwendung finden diese Urethanoligomere als Textilbeschichtung, wobei es auf eine besondere Flexibilität, Elastizität und Zugfestigkeit ankommt.

EP-A 98752 beschreibt ein Verfahren zur Herstellung wässriger Polyurethandispersionen, welche durch Umsetzung von Diolen mit ionisierbaren Gruppen, Polyesterpolyolen, Polyetherpolyolen, Diisocyanaten und monohydroxyfunktionellen Acrylaten erhalten werden.

In EP-A 181486 werden wässrige Dispersionen von UV-strahlenvernetzbaren Oligourethanen zur Herstellung von hochglänzenden Lacküberzügen auf Leder beansprucht, enthaltend Polyether-, Polyester-, Polylacton-, Polycarbonatdiole, gegenüber Isocyanatgruppen mono- oder difunktionelle anionische oder nichtionische Verbindungen, Diisocyanate, niedermolekulare Diamine und / oder Diole und monohydroxyfunktionelle Acrylate. Diese Systeme sind sehr flexibel und elastisch.

Wässrige Emulsionen auf Basis ionischer Urethanharnstoffacrylate werden in EP-A 209684 beschrieben, die dadurch gekennzeichnet sind, dass sie aus cycloaliphatischen Polyisocyanaten, Hydroxyalkylacrylaten, Polyesterpolyolen, Polyetherpolyolen und Natriumsalzen von Aminocarbonsäuren bestehen und nach einem Acetonverfahren hergestellt werden.

EP-A 392352 beschreibt wässrige Dispersionen von mit energiereicher Strahlung vernetzbaren Polyurethanen zur Beschichtung von flexiblen Substraten. Diese sind aufgebaut aus Polyisocyanaten, hochmolekularen Polyolen, niedermolekularen Polyolen, Polyaminen, Aminoalkoholen, einer OH- oder NH-funktionellen Verbindung mit einer ionisierbaren Gruppe, monofunktionellen Polyetherpolyolen und Verbindungen mit ethylenisch ungesättigten Gruppen und mindestens einer Hydroxylgruppe.

Die fünf oben aufgeführten Patente zeichnen sich dadurch aus, dass sie Systeme für flexible und elastische Beschichtungen bereitstellen mit Textilien als bevorzugtem Substrat. Die Polyesterpolyole, aufgebaut aus langkettigen, aliphatischen Polyolen und / oder Disäuren, werden als flexibilisierende Aufbaukomponente benutzt. Die physikalische Antrocknung der beschriebenen Systeme ist ungenügend, und die Beständigkeiten gegen Chemikalien sind ebenfalls nicht ausreichend. Das macht sich insbesondere in pigmentierten Formulierungen bemerkbar.

In EP-A 704469 werden wasserdispergierbare, strahlungshärtbare Polyurethane beschrieben, bestehend aus a) Polyisocyanaten, b) Polyesterpolyolen, c) niedermolekularen Polyolen, d) Verbindungen mit mindestens einer gegenüber Isocyanat reaktiven Gruppe und mindestens einer Carboxylgruppe, e) einer Verbindung mit mindestens einer gegenüber Isocyanat reaktiven Gruppe und mindestens einer copolymerisierbaren, ungesättigten Gruppe sowie gegebenenfalls f) ein mindestens difunktionelles Amin. Dabei müssen zur Herstellung des Polyurethans zumindest die Komponenten a), b) und e) in einer Stufe umgesetzt werden. Da diese Systeme insbesondere in der Textilbeschichtung eingesetzt werden, müssen sie sehr flexibel sein.

Wenngleich es Stand der Technik ist, strahlungshärtbare Polyurethandispersionen mit Hilfe von Polyesterpolyolen aufzubauen, so wurden Polyesterpolyole bislang bevorzugt als flexibilisierende Aufbaukomponenten benutzt, indem man die Polyester aus langkettigen und aliphatischen Polyolen und / oder Disäuren aufbaute. Solche flexibilisierenden Polyesterpolyole führen als Bausteine in einer strahlungshärtbaren Polyurethandispersion zu einer geringen physikalischen Trocknung und zu ungenügenden Beständigkeiten gegen färbende Agenzien und Lösungsmittel, insbesondere in pigmentierten Formulierungen.

Aufgabe war es, strahlungshärtbare Beschichtungssysteme bereitzustellen, die eine schnelle physikalische Trocknung ermöglichen, nach Trocknung sehr blockfest sind und nach Strahlenhärtung sehr harte und chemikalienbeständige Filme ermöglichen. Die Filme sollen aber nicht spröde und noch ausreichend flexibel sein. Dies soll für Klar- und pigmentierte Lacke gelten.

Überraschender Weise wurde gefunden, dass strahlenhärtbare, wässrige Dispersionen von Polyurethanacrylaten nach kurzer Trocknungszeit blockfeste Beschichtungen geben, wenn diese Polyesterpolyole auf Basis von aromatischen Di- und / oder Tricarbonsäuren und aliphatischen Diolen mit 2 bis 4 Kohlenstoffatomen oder aliphatischen Triolen enthalten. Außerdem erreichen die Filme dieser Dispersionen sowohl im Klarlack als auch als Pigmentlack nach Strahlenhärtung eine hohe Pendelhärte und erweisen sich als sehr resistent gegen Chemikalien und färbende Agenzien.

Die Erfindung betrifft strahlenhärtbare, wässrige Dispersionen auf Basis von Polyurethanacrylaten (i) enthaltend als Aufbaukomponenten
A) eine oder mehrere Verbindungen monohydroxyfunktioneller, (Meth)acrylatgruppen-haltiger Alkohole,
B) Polyesterpolyole erhältlich aus
   B1) aliphatischen Diolen mit 2 bis 4 Kohlenstoffatomen zwischen den beiden OH-Funktionen und / oder aliphatischen Triolen und
   B2) aromatischen Di- und / oder Tricarbonsäuren,
C) gegebenenfalls von A und B verschiedene Polyole,
D) eine oder mehrere Verbindungen mit mindestens einer gegenüber Isocyanat reaktiven Gruppe und zusätzlich nichtionische, ionische oder zur Ausbildung von ionischen Gruppen befähigte Gruppen, die für die Polyurethandispersion dispergierend wirken,
E) organische Polyisocyanate,
F) gegebenenfalls von A bis D verschiedene Verbindungen mit mindestens einer gegenüber Isocyanat reaktiven Gruppe.

"(Meth)acrylat" bezieht sich im Rahmen dieser Schrift auf entsprechende Acrylat- oder Methacrylatfunktionen oder auf eine Mischung beider.

Optional enthält die Dispersion eine Komponente ii, wobei es sich um Reaktivverdünner, die mindestens eine radikalisch polymerisierbare Gruppe aufweisen, handelt.

Aufbaukomponente A und gegebenenfalls Komponente ii werden dabei in solchen Mengen eingesetzt, dass der Gehalt an radikalisch copolymerisierbaren Doppelbindungen zwischen 0,5 und 6,0, bevorzugt zwischen 1,0 und 5,5, besonders bevorzugt zwischen 1,5 und 5,0 mol/kg nicht wässriger Bestandteile der Dispersion beträgt.

Aufbaukomponente B wird zu 5-75, bevorzugt zu 10-50, besonders bevorzugt zu 15-40 Gew.-% eingesetzt, wobei sich die Komponenten A bis F zu 100 Gew.-% addieren.

Komponente ii wird zu 0-65, bevorzugt 0-40, besonders bevorzugt 0-35 Gew.-% eingesetzt, wobei sich die Komponenten i und ii zu 100 Gew.-% addieren.

Komponente A enthält monohydroxyfunktionelle, (Meth)acrylatgruppen-haltige Alkohole. Bei solchen monohydroxyfunktionellen, (Meth)acrylatgruppen-haltigen Alkoholen handelt es sich beispielsweise um 2-Hydroxyethyl(meth)acrylat, Caprolacton-verlängerten Modifikationen von 2-Hydroxyethyl(meth)acrylat wie Pemcure^{®} 12A (Cognis, DE), 2-Hydroxypropyl(meth)acrylat, 4-Hydroxybutyl(meth)acrylat, 3-Hydroxy-2,2-dimethylpropyl(meth)acrylat, die im Mittel monohydroxyfunktionellen Di-, Tri- oder Penta(meth)acrylate mehrwertiger Alkohole wie Trimethylolpropan, Glycerin, Pentaerythrit, Ditrimethylolpropan, Dipentaerythrit, ethoxylierte, propoxyliertes oder alkoxyliertes Trimethylolpropan, Glycerin, Pentaerythrit, Ditrimethylolpropan, Dipentaerythrit oder deren technische Gemische.

Außerdem können auch Alkohole, die sich aus der Umsetzung von doppelbindungshaltigen Säuren mit gegebenenfalls doppelbindungshaltigen, monomeren Epoxidverbindungen erhalten lassen, als monohydroxyfunktionelle, (Meth)acrylatgruppen-haltige Alkohole eingesetzt werden. Bevorzugte Umsetzungsprodukte sind ausgewählt aus der Gruppe von (Meth)acrylsäure mit Glycidyl(meth)acrylat oder dem Glycidylester tertiärer, gesättigter Monocarbonsäure. Tertiäre, gesättigte Monocarbonsäuren sind beispielsweise 2,2-Dimethylbuttersäure, Ethylmethylbutter-, Ethylmethylpentan-, Ethylmethylhexan-, Ethylmethylheptan- und / oder Ethylmethyloktansäure.

Besonders bevorzugt als monohydroxyfunktionelle, (Meth)acrylatgruppen-haltige Alkohole sind 2-Hydroxyethyl(meth)acrylat, 2-Hydroxypropyl(meth)acrylat, Pentaerythrittriacrylat, Dipentaerythritpentaacrylat und das Additionsprodukt aus Ethylmethylheptansäureglycidylester mit (Meth)acrylsäure und deren technische Gemische. Ganz besonders bevorzugt ist 2-Hydroxy-ethyl(meth)acrylat.

Die monohydroxyfunktionellen, (Meth)acrylatgruppen-haltigen Alkohole (A) können für sich alleine als auch als Mischungen verwendet werden.

Bei Komponente B handelt es sich um hydroxyfunktionelle Polyester, die aufgebaut sind aus aliphatischen Diolen mit 2 bis 4 Kohlenstoffen zwischen den beiden OH-Funktionen (B1), wie zum Beispiel 1,2-Ethandiol, 1,2-Propandiol, 1,3-Propandiol, Neopentylglykol, 2-Ethyl-2-butylpropandiol, 1,3-Butandiol, 1,2- und 1,4-Cyclohexandiol und / oder 1,4-Butandiol, und / oder aliphatischen Triolen (B1), wie zum Beispiel Trimethylolethan, Trimethylolpropan, Trimethylolbutan, Glycerin und / oder Rizinusöl, sowie aromatischen Di- und / oder Tricarbonsäuren (B2), wie zum Beispiel Phthalsäure, Phthalsäureanhydrid, Isophthalsäure, Terephthalsäure und / oder Trimellithsäure sowie die Anhydride der genannten Säuren.

Bevorzugt als Bausteine für die Polyesterpolyole (B) sind 1,2-Ethandiol, 1,2-Propandiol, 1,3-Propandiol, Neopentylglykol, Trimethylolpropan, Glycerin und/oder Rizinusöl (B1) sowie Phthalsäure, Phthalsäureanhydrid, Isophthalsäure und / oder Terephthalsäure (B2).

Besonders bevorzugt als Bausteine für die Polyesterpolyole (B) sind 1,2-Ethandiol, 1,2-Propandiol, Neopentylglykol und / oder Trimethylolpropan (B1) sowie Isophthalsäure und / oder Terephthalsäure (B2).

Aufbaukomponente B) weist eine OH-Zahl von 20-500, bevorzugt 40-400 und besonders bevorzugt 70-390 mg KOH/g Substanz auf.

Die Komponente C enthält monomere Mono-, Di- und / oder Triole jeweils mit einem Molekulargewicht von 32 bis 240 g/mol, wie z. B. Methanol, Ethanol, 1-Propanol, 1-Butanol, 1-Pentanol, 1-Hexanol, 2-Propanol, 2-Butanol, 2-Ethylhexanol, Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, 1,3-Butylenglykol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), 2,2-Dimethyl-3-hydroxypropionsäure-(2,2-dimethyl-3-hydroxypropylester), Glycerin, Trimethylolethan, Trimethylolpropan und / oder Trimethylolbutan. Bevorzugt sind Neopentylglykol, 1,4-Butandiol, 1,4-Cyclohexandimethanol, 1,6-Hexandiol und / oder Trimethylolpropan.

Des Weiteren kann Komponente C oligomere und / oder polymere, hydroxyfunktionelle Verbindungen enthalten, wenngleich diese weniger bevorzugt sind, da durch sie eine Flexibilisierung erreicht wird, die den hart machenden Effekt von Komponente B) zumindest zum Teil wieder aufhebt. Diese oligomeren und / oder polymeren, hydroxyfunktionellen Verbindungen sind beispielsweise Polyester, Polycarbonate, C2-, C3-, und / oder C4-Polyether, Polyetherester, Polycarbonatpolyester mit einer Funktionalität von 1,0 bis 3,0, jeweils mit einem Gewichtsmittel der Molmasse M_{w} im Bereich von 300 bis 4000, bevorzugt 500 bis 2500 g/mol.

Hydroxyfunktionelle Polyesteralkohole sind solche auf Basis von aliphatischen und / oder cycloaliphatischen Dicarbonsäuren mit monomeren Di- und Triolen, wie sie bereits als Komponente C aufgezählt wurden, sowie Polyesteralkohole auf Lacton-Basis.

Hydroxyfunktionelle Polyetherole sind beispielsweise durch Polymerisation von cyclischen Ethern oder durch Umsetzung von Alkylenoxiden mit einem Startermolekül erhältlich.

Hydroxyfunktionelle Polycarbonate sind hydroxyl-terminierte Polycarbonate, die durch Umsetzung von Diolen, Lacton-modifizierten Diolen oder Bisphenolen, z. B. Bisphenol A, mit Phosgen oder Kohlensäurediestem, wie Diphenylcarbonat oder Dimethylcarbonat, zugängliche Polycarbonate.

Die Komponente D umfasst ionische Gruppen, die entweder kationischer oder anionischer Natur sein können, und / oder nichtionische hydrophile Gruppen. Kationisch, anionisch oder nichtionisch dispergierend wirkende Verbindungen sind solche, die beispielsweise Sulfonium-, Ammonium-, Phosphonium-, Carboxylat-, Sulfonat-, Phosphonat-Gruppen oder die Gruppen, die durch Salzbildung in die vorgenannten Gruppen überführt werden können (potentiell ionische Gruppen), oder Polyethergruppen enthalten und durch vorhandene isocyanatreaktive Gruppen in die Makromoleküle eingebaut werden können. Bevorzugt geeignete isocyanatreaktive Gruppen sind Hydroxyl- und Amingruppen.

Geeignete anionische oder potentiell anionische Verbindungen (D) sind zum Beispiel Mono- und Dihydroxycarbonsäuren, Mono- und Diaminocarbonsäuren, Mono- und Dihydroxysulfonsäuren, Mono- und Diaminosulfonsäuren, Mono- und Dihydroxyphosphonsäuren, Mono- und Diaminophosphonsäuren und ihre Salze, wie Dimethylolpropionsäure, Dimethylolbuttersäure, Hydroxypivalinsäure, N-(2-Aminoethyl)-alanin, 2-(2-Amino-ethylamino)-ethansulfonsäure, Ethylendiamin-propyl- oder butylsulfonsäure, 1,2- oder 1,3-Propylendiamin-ethylsulfonsäure, 3-(Cyclohexylamino)propan-1-sulfonsäure, Äpfelsäure, Zitronensäure, Glykolsäure, Milchsäure, Glycin, Alanin, Taurin, Lysin, 3,5-Diaminobenzoesäure, ein Additionsprodukt von Isophorondiamin (1-Amino-3,3,5-trimethyl-5-aminomethylcyclohexan oder IPDA) und Acrylsäure (EP-A 916 647, Beispiel 1), das Addukt von Natriumbisulfit an Buten-2-diol-1,4, Polyethersulfonat sowie das propoxylierte Addukt aus 2-Butendiol und NaHSO3, wie es in DE-A 2 446 440 auf Seite 5-9, Formel I-III beschrieben ist. Geeignete kationische oder in kationische Gruppen überführbare Bausteine sind beispielsweise Ethanolamin, Diethanolamin, Triethanolamin, 2-Propanolamin, Dipropanolamin, Tripropanolamin, N-Methylethanolamin, N-Methyl-diethanolamin und N,N-Dimethylethanolamin.

Besonders bevorzugte ionische oder potentiell ionische Verbindungen (D) sind solche, die Carboxyl- und / oder Sulfonatgruppen als ionische Gruppen enthalten, wie 2-(2-Amino-ethylamino-)ethansulfonsäure, 3-(Cyclohexylamino)propan-1-sulfonsäure, das Additionsprodukt von Isophorondiamin und Acrylsäure (EP 916 647 A1, Beispiel 1), Hydroxypivalinsäure und / oder Dimethylolpropionsäure, sowie solche, die tertiäre Amine aufweisen, wie Triethanolamin, Tripropanolamin, NMethyldiethanolamin und / oder N,N-Dimethylethanolamin

Ganz besonders bevorzugte ionische oder potentiell ionische Verbindungen (D) sind Hydroxypivalinsäure und / oder Dimethylolpropionsäure.

Geeignete nichtionisch hydrophilierend wirkende Verbindungen sind zum Beispiel Polyoxyalkylenether, die mindestens eine Hydroxy- oder Aminogruppe enthalten. Diese Polyether enthalten einen Anteil von ≥30 Gew.-% bis ≤ 100 Gew.-% an Bausteinen, die vom Ethylenoxid abgeleitet sind. In Frage kommen linear aufgebaute Polyether einer Funktionalität zwischen ≥1 und ≤ 3, aber auch Verbindungen der allgemeinen Formel (I), 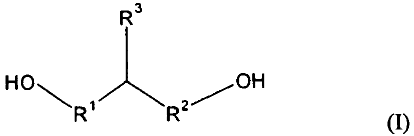 in welcher

R1 und R2 unabhängig voneinander jeweils einen zweiwertigen aliphatischen, cycloaliphatischen oder aromatischen Rest mit 1 bis 18 C-Atomen, die durch Sauerstoff und / oder Stickstoffatome unterbrochen sein können, bedeuten und R3 für einen alkoxyterminierten Polyethylenoxidrest steht.

Nichtionisch hydrophilierend wirkende Verbindungen sind beispielsweise auch einwertige, im statistischen Mittel ≥ 5 bis ≤ 70, bevorzugt ≥ 7 bis ≤ 55 Ethylenoxideinheiten pro Molekül aufweisende Polyalkylenoxidpolyetheralkohole, wie sie durch Alkoxylierung geeigneter Startermoleküle zugänglich sind.

Geeignete Startermoleküle sind beispielsweise gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykol-monoalkylether wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Bevorzugte Startermoleküle sind gesättigte Monoalkohole. Besonders bevorzugt wird Diethylenglykolmonobutylether als Startermolekül verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den Polyalkylenoxidpolyetheralkoholen handelt es sich entweder um reine Polyethylenoxidpolyether oder gemischte Polyalkylenoxidpolyether, deren Alkylenoxideinheiten zu ≥ 30 mol-%, bevorzugt zu ≥ 40 mol-% Ethylenoxideinheiten umfassen. Bevorzugte nichtionische Verbindungen sind monofunktionelle gemischte Polyalkylenoxidpolyether, die ≥40 mol-% Ethylenoxid- und ≤60 mol-% Propylenoxideinheiten aufweisen.

Die unter Komponente D genannten Säuren werden durch Umsetzung mit Neutralisationsmitteln, wie Triethylamin, Ethyldiisopropylamin, Dimethylcyclohexylamin, Dimethylethanolamin, Ammoniak, N-Ethylmorpholin, LiOH, NaOH und / oder KOH in die entsprechenden Salze überführt. Der Neutralisationsgrad liegt dabei bevorzugt zwischen 50 und 125%.

Die unter Komponente D genannten Basen werden durch Umsetzung mit Neutralisationsmitteln, wie z. B. anorganische Säuren, wie beispielsweise Salzsäure, Phosphorsäure und / oder Schwefelsäure, und / oder organischen Säuren, wie beispielsweise Ameisensäure, Essigsäure Milchsäure, Methansulfsonsäure, Ethansulfonsäure und / oder p-Toluolsulfonsäure, in die entsprechenden Salze überführt. Der Neutralisationsgrad liegt dabei bevorzugt zwischen 50 und 125%.

Die unter Komponente D aufgeführten Verbindungen können auch in Mischungen verwendet werden.

Die ionische Hydrophilierung und die Kombination von ionischer und nicht-ionischer Hydrophilierung sind gegenüber der rein nicht-ionischen Hydrophilierung bevorzugt.

Die Komponente E sind Polyisocyanate ausgewählt aus der Gruppe von aromatischen, araliphatischen, aliphatischen oder cycloaliphatischen Polyisocyanaten oder Mischungen solcher Polyisocyanate. Geeignete Polyisocyanate sind z.B 1,3-Cyclohexandiisocyanat, 1-Methyl-2,4-diisocyanatocyclohexan, 1-Methyl-2,6-diisocyanato-cyclohexan, Tetramethylendiisocyanat, 4,4'-Diisocyanatodiphenylmethan, 2,4'-Diisocyanatodiphenylmethan, 2,4-Diisocyanatotoluol, 2,6-Diisocyanatotoluol, α,α,α,'α,'-Tetra-methyl-m- oder p-Xylylendiisocyanat, 1,6-Hexamethylendiisocyanat, 1-Isocyanato-3,3,5-trimethyl-5-isocyanatomethylcyclohexan (Isophorondiisocyanat oder IPDI), 4,4'-Diisocyanato-dicyclohexylmethan, 4-Isocyanatomethyl-1,8-octan-diisocyanat (Triisocyanatononan, TIN) (EP-A 928 799) sowie deren Mischungen. Ebenfalls geeignet sind Homologe bzw. Oligomere dieser aufgezählten Polyisocyanate mit Biuret-, Carbodiimid-, Isocyanurat-, Allophanat-, Iminooxadiazindion- und / oder Uretdiongruppen, deren Mischungen untereinander sowie Mischungen mit den zuvor aufgeführten Polyisocyanaten. Bevorzugt sind 1,6-Hexamethylendiisocyanat, 1-Isocyanato-3,3,5-trimethyl-5-isocyanatomethylcyclohexan (Isophorondiisocyanat oder IPDI) und 4,4'-Diisocyanato-dicyclohexylmethan sowie deren Mischungen untereinander. Ebenfalls bevorzugt sind Homologe bzw. Oligomere von 1-Isocyanato-3,3,5-trimethyl-5-isocyanatomethyleyclohexan (Isophorondiisocyanat oder IPDI) und 4,4'-Diisocyanato-dicyclohexylmethan mit Biuret-, Carbodiimid-, Isocyanurat-, Allophanat-, Iminooxadiazindion- und / oder Uretdiongruppen, deren Mischungen untereinander sowie Mischungen mit den zuvor aufgeführten, bevorzugten Polyisocyanaten.

Zur Erhöhung der Molmasse werden Mono- und Diamine und / oder mono- oder difunktionelle Aminoalkohole als Komponente F verwendet. Bevorzugte Diamine sind solche, die gegenüber den Isocyanatgruppen reaktiver sind als Wasser, da die Verlängerung des Polyesterurethan(meth)acrylats gegebenenfalls im wässrigen Medium stattfindet. Besonders bevorzugt sind die Diamine ausgewählt aus der Gruppe von Ethylendiamin, 1,6-Hexamethylendiamin, Isophorondiamin, 1,3-, 1,4-Phenylendiamin, 4,4'-Diphenylmethandiamin, aminofunktionelle Polyethylenoxide, aminofunktionelle Polypropylenoxide (bekannt unter dem Namen Jeffamin^{®} D-Reihe [Huntsman Corp. Europe, Zavantem, Belgien]) und Hydrazin. Ganz besonders bevorzugt ist Ethylendiamin.

Bevorzugte Monoamine sind ausgewählt aus der Gruppe von Butylamin, Ethylamin und Amine der Jeffamin^{®} M-Reihe (Huntsman Corp. Europe, Zavantem, Belgien), aminofunktionelle Polyethylenoxide, aminofunktionelle Polypropylenoxide und / oder Aminoalkohole.

Die Komponente ii sind Reaktivverdünner, unter denen Verbindungen zu verstehen sind, die mindestens eine radikalisch polymerisierbare Gruppe, bevorzugt Acrlyat- und Methacrylatgruppen, und bevorzugt keine gegenüber Isocyanat- oder Hydroxygruppen reaktiven Gruppen enthalten.

Bevorzugte Verbindungen ii weisen 2 bis 6 (Meth)acrylatgruppen auf, besonders bevorzugte 4 bis 6.

Besonders bevorzugte Verbindungen ii weisen einen Siedepunkt von mehr als 200 °C bei Normaldruck auf.

Reaktivverdünner sind allgemein in P. K. T. Oldring (Herausgeber), Chemistry & Technology of UV & EB Formulations for Coatings, Inks & Paints, Vo. II, Chapter III: Reactive Diluents for UV & EB Curable Formulations, Wiley and SITA Technology, London 1997 beschrieben.

Reaktivverdünner sind beispielsweise die mit (Meth)acrylsäure vollständig veresterten Alkohole Methanol, Ethanol, 1-Propanol, 1-Butanol, 1-Pentanol, 1-Hexanol, 2-Propanol, 2-Butanol, 2-Ethylhexanol, Dihydrodicyclopentadienol, Tetrahydrofurfurylalkohol, 3,3,5-Trimethylhexanol, Octanol, Decanol, Dodecanol, Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, 1,3-Butylenglykol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), Glycerin, Trimethylolethan, Trimethylolpropan Trimethylolbutan, Pentaerythrit, Ditrimethylolpropan, Dipentaerythrit, Sorbitol sowie ethoxylierte und / oder propoxylierte Derivate der aufgeführten Alkohole und die bei der (Meth)acrylierung der vorgenannten Verbindungen anfallenden technischen Gemische.

Die Komponente ii ist bevorzugt ausgewählt aus der Gruppe von (Meth)acrylaten von Tetrolen und Hexolen, wie (Meth)acrylate von Pentaerythrit, Ditrimethylolpropan, Dipentaerythrit, Sorbitol, ethoxyliertes, propoxyliertes oder alkoxyliertes Pentaerythrit, Ditrimethylolpropan, Dipentaerythrit, Sorbitol sowie ethoxylierte und / oder propoxylierte Derivate der aufgeführten Alkohole und die bei der (Meth)acrylierung der vorgenannten Verbindungen anfallenden technischen Gemische.

Zur Herstellung der erfindungsgemäßen Dispersionen können sämtliche, aus dem Stand der Technik bekannte Verfahren wie Emulgator-Scherkraft-, Aceton-, Präpolymer-Misch-, Schmelz-Emulgier-, Ketimin- und Feststoff-Spontan-Dispergier-Verfahren oder Abkömmlinge davon verwendet werden. Eine Zusammenfassung dieser Methoden findet sich in Methoden der Organischen Chemie, Houben-Weyl, 4. Auflage, Band E20 / Teil 2 auf Seite 1682, Georg Thieme Verlag, Stuttgart, 1987. Bevorzugt sind das Schmelz-Emulgier- und das Aceton-Verfahren. Besonders bevorzugt wird das Aceton-Verfahren.

Gegenstand der Erfindung ist auch ein Verfahren zur Herstellung strahlenhärtbarer, wässriger Dispersionen auf Basis von Polyurethanacrylaten (i), dadurch gekennzeichnet, dass durch Umsetzen der Komponenten A-D in einem oder mehreren Reaktionsschritten mit Komponente E ein Polyurethanacrylatprepolymer (i) erhalten wird, wobei ein Neutralisationsmittel zur Erzeugung der für die Dispergierung notwendigen ionischen Gruppen vor, während oder nach der Prepolymerherstellung zugegeben werden kann, gefolgt von einem Dispergierschritt durch Zugabe von Wasser zum Prepolymer bzw. Überführen des Prepolymers in eine wässrige Vorlage, wobei vor, während oder nach der Dispergierung eine Kettenverlängerung mittels Komponente F erfolgen kann.

Gegenstand der Erfindung ist auch ein Verfahren gemäß vorstehender Beschreibung, bei dem ein oder mehrere Reaktivverdünner, enthaltend mindestens eine radikalisch polymerisierbare Gruppe, (Komponente ii) beigemischt werden.

Zur Herstellung des Reaktionsproduktes werden die Komponenten A, B, C und D im Reaktor vorgelegt und gegebenenfalls mit Aceton verdünnt. Gegebenenfalls kann auch Komponente ii zu den Komponenten A bis D zugesetzt werden. Zur Beschleunigung der Addition an Isocyanat können Isocyanatadditionsreaktionkatalysatoren wie zum Beispiel Triethylamin, 1,4-Diazabicyclo-[2,2,2]-oktan, Zinndioktoat oder Dibutylzinndilaurat zugesetzt werden, und die Mischung erwärmt werden, um ein Anspringen der Reaktion zu ermöglichen. In der Regel sind dazu Temperaturen von 30 bis 60 °C nötig. Anschließend dosiert man das oder die Polyisocyanate (E) zu. Auch die umgekehrte Variante ist möglich, wobei dann die Polyisocyanate (E) vorgelegt und die isocyanatreaktiven Komponenten A, B, C und D zugegeben werden. Die Zugabe der Komponenten A, B, C und D kann auch nacheinander und in beliebiger Reihenfolge erfolgen. Ebenfalls ist eine stufenweise Umsetzung der Komponenten möglich, das heißt die separate Umsetzung von Komponente E mit eine oder mehreren isocyanatreaktiven Komponenten A, B, C und / oder D bevor das gewonnene Addukt mit den noch nicht verwendeten Komponenten weiter umgesetzt wird.

Zur Kontrolle der Reaktion wird der NCO-Gehalt in regelmäßigen Abständen über Titration, Infrarot- oder Nahinfrarot-Spektroskopie, bestimmt.

Die molaren Verhältnisse von Iscocyanatgruppen in E zu gegenüber Isocyanaten reaktiven Gruppen in A, B, C und D betragen von 0,8 : 1 bis 2,5 : 1, bevorzugt 1,2 : 1 bis 1,5 : 1.

Nach der Herstellung des Produktes (i) nach dem erfindungsgemäßen Verfahren aus den Komponenten A, B, C, D und E erfolgt, falls dies noch nicht in den Ausgangsmolekülen durchgeführt wurde, die Salzbildung der ionisch dispergierend wirkenden Zentren der Verbindungen D. Im Fall, dass Komponente D saure Gruppen enthält, werden bevorzugt Basen ausgewählt aus der Gruppe von Triethylamin, Ethyldiisopropylamin, Dimethylcyclohexylamin, Dimethylethanolamin, Ammoniak, N-Ethylmorpholin, LiOH, NaOH und / oder KOH eingesetzt. Im Fall, dass Komponente D basische Gruppen enthält, werden bevorzugt Säuren ausgewählt aus der Gruppe von Milchsäure, Essigsäure, Phosphorsäure, Chlorwasserstoffsäure und / oder Schwefelsäure eingesetzt. Werden als Komponente D nur Ethergruppen enthaltende Verbindungen eingesetzt, entfällt dieser Neutralisationsschritt.

Im Anschluss kann optional ein Reaktivverdünner ii oder einer Mischung von Reaktivverdünnern ii zugegeben werden. Das Zumischen von Komponente ii erfolgt bevorzugt bei 30-45 °C. Sobald diese sich gelöst hat, folgt gegebenenfalls der letzte Reaktionsschritt, bei dem im wässrigen Medium eine Molmassenerhöhung und die Ausbildung der für das erfindungsgemäße Beschichtungssystem benötigten Dispersionen stattfinden: Das Polyurethan, synthetisiert aus den Komponenten A), B), C), D) und E), und gegebenenfalls der oder die Reaktivverdünner ii gegebenenfalls gelöst in Aceton werden unter starkem Rühren entweder in das Dispergierwasser, das das oder die Amine (F) enthält, eingetragen oder man rührt umgekehrt die Dispergierwasser-Amin-Mischung zu der Polyurethanlösung. Außerdem bilden sich die Dispersionen aus, die im erfindungsgemäßen Beschichtungssystem enthalten sind. Die eingesetzte Menge an Amin (F) hängt von den noch vorhandenen, nicht umgesetzten Isocyanatgruppen ab. Die Umsetzung der noch freien Iscocyanatgruppen mit dem Amin (F) kann zu 35% bis 150% erfolgen. In dem Fall, dass ein Unterschuss an Amin (F) eingesetzt wird, reagieren noch freie Isocyanatgruppen langsam mit Wasser ab. Wird ein Überschuss an Amin (F) verwendet, so liegen keine unreagierten Isocyanatgruppen mehr vor und es wird ein aminfunktionelles Polyurethan erhalten. Bevorzugt werden 80% bis 110%, besonders bevorzugt 90% bis 100% der noch freien Isocyanatgruppen mit dem Amin (F) umgesetzt.

In einer weiteren Variante ist es möglich, die Molmassenerhöhung durch das Amin (F) bereits in acetonischer Lösung, d.h. vor der Dispergierung, und gegebenenfalls vor oder nach der Zugabe des oder der Reaktivverdünner (ii)) durchzuführen.

In einer weiteren Variante ist es möglich, die Molmassenerhöhung durch das Amin (F) nach dem Dispergierschritt durchzuführen.

Falls erwünscht, kann das organische Lösungsmittel - sofern vorhanden - abdestilliert werden. Die Dispersionen haben dann einen Festkörpergehalt von 20 bis 60 Gew.-%, insbesondere 30 bis 58 Gew.-%.

Es ist ebenfalls möglich, Dispergier- und Destillationsschritt parallel, das heißt gleichzeitig oder zumindest teilweise gleichzeitig durchzuführen.

Gegenstand der Erfindung ist auch die Verwendung der erfindungsgemäßen strahlenhärtbaren, wässrigen Dispersionen zur Herstellung von Beschichtungen insbesondere von Lacken und Klebstoffen.

Die erfindungsgemäßen Dispersionen ergeben nach Entfernen des Wassers mit üblichen Methoden, wie Wärme, Wärmestrahlung, bewegter ggf. getrockneter Luft und / oder Mikrowellen, klare Filme. Durch anschließende strahlenchemisch und / oder radikalisch induzierte Vernetzung härten die Filme zu besonders hochwertigen und chemikalienresistenten Lacküberzügen aus.

Zur strahlenchemisch induzierten Polymerisation ist elektromagnetische Strahlung geeignet, deren Energie, gegebenenfalls unter Zusatz von geeigneten Photoinitiatoren, ausreicht, um eine radikalische Polymerisation von (Meth)acrylat-Doppelbindungen zu bewirken.

Bevorzugt erfolgt die strahlenchemisch induzierte Polymerisation mittels Strahlung mit einer Wellenlänge von kleiner 400 nm, wie UV-, Elektronen-, Röntgen- oder Gamma-Strahlen. Besonders bevorzugt ist die UV-Strahlung, wobei die Härtung mit UV-Strahlung in Gegenwart von Fotoinitiatoren ausgelöst wird. Bei den Fotoinitiatoren wird prinzipiell zwischen zwei Typen unterschieden, dem unimolekularen (Typ I) und dem bimolekularen (Typ II). Geeignete (Typ I)-Systeme sind aromatische Ketonverbindungen, wie z. B. Benzophenone in Kombination mit tertiären Aminen, Alkylbenzophenone, 4,4'-Bis(dimethylamino)benzophenon (Michlers Keton), Anthron und halogenierte Benzophenone oder Mischungen der genannten Typen. Weiter geeignet sind (Typ II)-Initiatoren wie Benzoin und seine Derivate, Benzilketale, Acylphosphinoxide, 2,4,6-Trimethyl-benzoyl-diphenylphosphinoxid, Bisacylphosphinoxide, Phenylglyoxylsäureester, Campherchinon, α-Aminoalkylphenone, α,α-Dialkoxyacetophenone und α-Hydroxyalkylphenone. Bevorzugt sind Fotoinitiatoren, die leicht in wässrige Beschichtungsmittel einzuarbeiten sind. Solche Produkte sind beispielsweise Irgacure® 500 (eine Mischung von Benzophenon und (1-Hydroxycyclohexyl)phenylketon, Fa. Ciba, Lampertheim, DE), Irgacure® 819 DW (Phenylbis-(2,4,6-trimethylbenzoyl)-phosphinoxid, Fa. Ciba, Lampertheim, DE), Esacure® KIP EM (Oligo-[2-hydroxy-2-methyl-1-[4-(1-methylvinyl)-phenyl]-propanone], Fa. Lamberti, Aldizzate, Italien). Es können auch Gemische dieser Verbindungen eingesetzt werden.

Zur Einarbeitung der Photoinitiatoren können auch polare Lösemittel, wie z. B. Aceton und Isopropanol, verwendet werden.

Vorteilhaft wird die UV-Härtung bei 30-70 °C durchgeführt, weil bei höherer Temperatur der Umsetzungsgrad an (Meth)acrylatgruppen tendenziell erhöht ist. Dies kann bessere Beständigkeitseigenschaften zur Folge haben. Allerdings ist bei der UV-Härtung eine mögliche Temperaturempfindlichkeit des Substrats zu berücksichtigen, so dass optimale Härtungsbedingungen für eine bestimmte Beschichtungsmittel-Substrat-Kombination vom Fachmann in einfachen Vorversuchen zu ermitteln sind.

Der oder die Strahler, die die radikalische Polymerisation auslösen, können dabei ortsfest sein und das beschichtete Substrat wird durch geeignete übliche Vorrichtungen am Strahler vorbeibewegt oder die Strahler sind durch übliche Vorrichtungen beweglich, so dass die beschichteten Substrate während der Härtung ortsfest sind. Es ist auch möglich die Bestrahlung z.B. in Kammern durchzuführen, bei denen das beschichtete Substrat in die Kammer eingebracht wird, anschließend die Strahlung für einen bestimmten Zeitraum eingeschaltet wird, und nach der Bestrahlung das Substrat wieder aus der Kammer entfernt wird.

Gegebenenfalls wird unter Inertgasatmosphäre, d. h. unter Sauerstoffausschluss, gehärtet, um eine Inhibierung der radikalischen Vernetzung durch Sauerstoff zu verhindern.

Erfolgt die Härtung thermisch-radikalisch, eignen sich wasserlösliche Peroxide oder wässrige Emulsionen nicht-wasserlöslicher Initiatoren. Diese Radikalbildner können in bekannter Weise mit Beschleunigern kombiniert werden.

Die erfindungsgemäßen Beschichtungssysteme lassen sich durch die üblichen Techniken auf unterschiedlichste Substrate applizieren, bevorzugt Spritzen, Walzen, Fluten, Drucken, Rakeln, Gießen, Streichen und Tauchen.

Mit den erfindungsgemäßen Beschichtungssystemen können grundsätzlich alle Substrate lackiert bzw. beschichtet werden. Bevorzugte Substrate sind ausgewählt aus der Gruppe bestehend aus mineralischen Untergründen, Holz, Holzwerkstoffen, Möbeln, Parkett, Türen, Fensterrahmen, metallischen Gegenständen, Kunststoffen, Papier, Pappe, Kork, mineralischen Substraten, Textilien oder Leder. Sie eignen sich hierbei als Grundierung und / oder als Decklack. Zusätzlich können die erfindungsgemäßen Beschichtungssysteme auch in oder als Klebstoffe eingesetzt werden, z. B. in Kontaktklebstoffen, in thermoaktivierbaren Klebstoffen oder in Kaschierklebstoffen.

Die erfindungsgemäßen Beschichtungssysteme können alleine aber auch in Bindemittelmischungen mit anderen Dispersionen eingesetzt werden. Dies können Dispersionen sein, die ebenfalls ungesättigte Gruppen enthalten, wie z. B. ungesättigte, polymerisierbare Gruppen enthaltende Dispersionen auf Polyester-, Polyurethan-, Polyepoxy(meth)acrylat-, Polyether-, Polyamid-, Polysiloxan-, Polycarbonat-, Epoxyacrylat-, Polymerisat-, Polyesteracrylat-, Polyurethan-Polyacrylat- und / oder Polyacrylatbasis.

Es können auch solche Dispersionen auf Basis von Polyestern, Polyurethanen, Polyethern, Polyamiden, Polyvinylestern, Polyvinylethern, Polysiloxanen, Polycarbonaten, und / oder Polyacrylaten, in den erfindungsgemäßen Beschichtungssystemen enthalten sein, die funktionelle Gruppen, wie Alkoxysilangruppen, Hydroxygruppen und / oder gegebenenfalls in blockierter Form vorliegende Isocyanatgruppen aufweisen. So können Dual-Cure-Systeme hergestellt werden, die über zwei verschiedene Mechanismen ausgehärtet werden können.

Ebenfalls für Dual-Cure-Systeme können dem erfindungsgemäßen Beschichtungssystem, weiterhin so genannte Vernetzter zugesetzt werden. Es kommen bevorzugt nicht-blockierte und / oder blockierte Polyisocyanate, Polyaziridine, Polycarbodiimide sowie Melaminharze in Frage. Besonders bevorzugt sind nicht-blockierte und / oder blockierte, hydrophilierte Polyisocyanate für wässrige Beschichtungsmittel. Bevorzugt werden ≤20 Gew.-%, besonders bevorzugt ≤10 Gew.-% an festem Vernetzer auf den Festgehalt des Beschichtungsmittels zugesetzt.

Es können auch Dispersionen auf Basis von auf Polyestern, Polyurethanen, Polyethern, Polyamiden, Polysiloxanen, Polyvinylethern, Polybutadienen, Polyisoprenen, Chlorkautschuken, Polycarbonaten, Polyvinylestern, Polyvinylchloriden, Polyacrylaten, Polyurethan-Polyacrylat-, Polyesteracrylat-, Polyetheracrylat-, Alkyd-, Polycarbonat-, Polyepoxy-, Epoxy(meth)acrylatbasis in den erfindungsgemäßen Beschichtungssystemen enthalten sein, die keine funktionellen Gruppen aufweisen. Damit kann der Grad der Vernetzungsdichte reduziert werden, die physikalische Trocknung beeinflusst, z. B. beschleunigt werden, oder eine Elastifizierung bzw. auch eine Haftungsanpassung vorgenommen werden.

Beschichtungsmittel, welche die erfindungsgemäßen Beschichtungssysteme enthalten, können auch Aminovernetzerharze, auf Melamin- oder Hamstoffbasis und / oder Polyisocyanate mit freien oder mit blockierten Polyisocyanatgruppen, auf Basis von gegebenenfalls hydrophilierenden Gruppen enthaltenden Polyisocyanaten aus Hexamethylendiisocyanat, Isophorondiisocyanat und / oder Toluylidendiisocyanat mit Urethan-, Uretdion-, Iminoxadiazindion-, Isocyanurat-, Biuret- und / oder Allophanatstrukturen in den erfindungsgemäßen Beschichtungssystemen zugesetzt sein. Als weitere Vernetzer sind auch Carbodiimide oder Polyaziridine möglich.

Die erfindungsgemäßen Beschichtungssysteme können mit den in der Lacktechnologie bekannten Bindemitteln, Hilfsstoffen und Additiven, wie z. B. Pigmente, Farbstoffe oder Mattierungsmittel versetzt bzw. kombiniert werden. Dies sind Verlaufs- und Benetzungsadditive, Slip-Additive, Pigmente einschließlich Metallic-Effektpigmente, Füllstoffe, Nanopartikel, Lichtschutzpartikel, Anti-Vergilbungsadditive, Verdicker und Additive zur Reduktion der Oberflächenspannung.

Die erfindungsgemäßen Beschichtungssysteme sind für die Beschichtungen von Folien geeignet, wobei zwischen physikalischer Trocknung und UV-Härtung eine Verformung der beschichteten Folie stattfindet.

Besonders geeignet sind die erfindungsmäßigen Beschichtungssysteme für Klarlackanwendungen auf Holz- und Kunststoffsubstraten, bei denen es nach physikalischer Trocknung auf Blockfestigkeit und nach Strahlenhärtung auf gute Resistenzen gegen Chemikalien ankommt.

Ebenfalls besonders geeignet sind die erfindungsmäßigen Beschichtungssysteme für Holz- und Kunststoffanwendungen mit einem Pigmentgehalt ≥ 10 Gew.-%, bezogen auf die gesamte Formulierung. Sollte es aufgrund von hohen Pigmentgehalten zu einer unvollständigen Reaktion der strahlungshärtbaren Gruppen im Beschichtungssystem während der Strahlungshärtung kommen, so werden blockfeste Beschichtungen erhalten.

Beschichtungsmittel enthaltend die erfindungsgemäßen strahlenhärtbaren, wässrigen Dispersionen auf Polyurethanacrylatbasis, sowie Vernetzer auf Basis von Aminoharzen, blockierten Polyisocyanaten, nicht blockierten Polyisocyanaten, Polyaziridinen und / oder Polycarbodiimiden, und / oder ein oder mehrere weitere Dispersionen, sind ebenfalls Gegenstand der vorliegenden Erfindung.

Weiterhin sind Substrate beschichtet mit den erfindungsgemäßen Beschichtungssystemen ein Gegenstand dieser Erfindung.

### Beispiele

Der NCO-Gehalt wurde jeweils gemäß DIN 53185 titrimetrisch verfolgt.

Der Feststoffgehalt wurde gravimetrisch nach Abdampfen aller nichtflüchtigen Bestandteile gemäß DIN 53216 bestimmt.

Die mittlere Teilchengröße wurde durch Laser-Korrelationsspektroskopie ermittelt.

### Beispiel 1:

### Herstellung eines erfindungsgemäßen Polyesters, Komponente B

6574 Teile Isophthalsäure, Komponente B2, 1327 Teile Trimethylolpropan, Komponente B1, 7207 Teile Neopentylglykol, Komponente B1, und 4 Teile Fascat^{®} 4100 (Butylstannonsäure, Arcema Inc., Philadelphia, PA, US) wurden gemeinsam unter Rühren auf 190 °C aufgeheizt. Diese Temperatur wurde gehalten, bis eine Säurezahl von weniger als 1,5 mg KOH/g Substanz erreicht war. Es wurde ein Polyester mit einer mittleren Funktionalität von 2,3 und einer Hydroxylzahl von 365 mg KOH/g Substanz erhalten.

### Beispiel 2:

### Herstellung eines erfindungsgemäßen Polyesters, Komponente B

1661 Teile Isophthalsäure, Komponente B2, 1661 Teile Terephthalsäure, Komponente B2, 782 Teile Ethylenglykol, Komponente B1, 1206 Teile Neopentylglykol, Komponente B1, und 1,5 Teile Fascat^{®} 4100 (Butylstannonsäure, Arcema Inc., Philadelphia, PA, US) wurden gemeinsam unter Rühren auf 190 °C aufgeheizt. Diese Temperatur wurde gehalten, bis eine Säurezahl von weniger als 1,5 mg KOH/g Substanz erreicht war. Es wurde ein Polyester mit einer mittleren Funktionalität von 2,0 und einer Hydroxylzahl von 99 mg KOH/g Substanz erhalten.

### Beispiel 3:

### Herstellung eines erfindungsgemäßen Polyesters, Komponente B

1480 Teile Phthalsäureanhydrid, Komponente B2, und 985 Teile Ethylenglykol, Komponente B1, wurden gemeinsam unter Rühren auf 220 °C aufgeheizt. Diese Temperatur wurde gehalten, bis eine Säurezahl von weniger als 1,5 mg KOH/g Substanz erreicht war. Es wurde ein Polyester mit einer mittleren Funktionalität von 2,0 und einer Hydroxylzahl von 288 mg KOH/g Substanz erhalten.

### Beispiel 4:

### Herstellung eines nicht erfindungsgemäßen Polyesters, Komponente B

1460 Teile Adipinsäure, Komponente B2, 219 Teile Trimethylolpropan, Komponente B1, und 1435 Teile Neopentylglykol, Komponente B1, wurden gemeinsam unter Rühren auf 220 °C aufgeheizt. Diese Temperatur wurde gehalten, bis eine Säurezahl von weniger als 1,5 mg KOH/g Substanz erreicht war. Es wurde ein Polyester mit einer mittleren Funktionalität von 2,3 und einer Hydroxylzahl von 255 mg KOH/g Substanz erhalten.

### Beispiel 5:

### Herstellung des Polyesters aus EP-A 704469, Beispiel 1

1503 Teile Isophthalsäure, 1321 Teile Adipinsäure und 2413 Teile Hexandiol wurden gemeinsam unter Rühren auf 220 °C aufgeheizt. Diese Temperatur wurde gehalten, bis eine Säurezahl von weniger als 1,5 mg KOH/g Substanz erreicht war. Es wurde ein Polyester mit einer mittleren Funktionalität von 2,0 und einer Hydroxylzahl von 46 mg KOH/g Substanz erhalten.

### Beispiel 6:

### Herstellung einer erfindungsgemäßen, UV-härtbaren, wässrigen Polyurethan-Dispersion

Bei 60 °C wurden zu einer Mischung von 2236 Teilen 4,4'-Diisocyanatodicyclohexylmethan, Komponente E, 2244 Teilen Desmodur^{®} N 3300 (HDI-Trimerisat, Bayer AG, Leverkusen, DE), Komponente E und 0,75 Teilen Dibutylzinndilaurat in 1519 Teilen Aceton 1595 Teile 2-Hydroxyethylacrylat, Komponente A, zudosiert und weiter bei 60 °C verrührt bis ein NCO-Gehalt von 8,2 Gew.-% erreicht wurde. Anschließend wurden bei 40 °C 1373 Teile des Polyesters aus Beispiel 1), Komponente B, gelöst in 421 Teilen Aceton, 305 Teile Dimethylolpropionsäure, Komponente D, und 0,75 Teile Dibutylzinndilaurat zugegeben und die Mischung auf 60 °C unter Rühren aufgeheizt. Nach Erreichen eines NCO-Gehaltes von 0,6 Gew.-% wurde auf 40 °C abgekühlt, und es folgte die Neutralisation mit 147 Teilen Triethylamin. Die klare Lösung wurde unter Rühren in 11350 Teile Wasser eingetragen. Daraufhin wurde eine Mischung aus 43,6 Teilen Ethylendiamin, Komponente F, und 100 Teilen Wasser der Dispersion unter Rühren zugesetzt. Im Anschluss wurde das Aceton unter leichtem Vakuum aus der Dispersion abdestilliert. Man erhielt eine erfindungsgemäße, UV-härtbare, wässrige Polyurethan-Dispersion 6) mit einem Feststoffgehalt von 43 Gew.-%, einer mittleren Teilchengröße von 132 nm und einem pH-Wert von 8,5.

### Beispiel 7:

### Herstellung einer erfindungsgemäßen, UV-härtbaren, wässrigen Polyurethan-Dispersion

410 Teile Desmodur^{®} N 3300 (HDI-Trimerisat, Bayer AG, Leverkusen, DE), Komponente E, 0,3 Teile p-Methoxyphenol und 0,006 Teile Dibutylzinndilaurat wurden in 143 Teilen Aceton gelöst. Bei 60 °C erfolgte die Zugabe von 163 Teilen 2-Hydroxyethylacrylat, Komponente A. Nach Erreichen eines NCO-Gehaltes von 4,1 Gew.-% wurde auf 40 °C abgekühlt und 435 Teile einer 80%igen acetonischen Lösung des Polyesters aus Beispiel 2), Komponente B, 47 Teile Dimethylolpropionsäure, Komponente D, 92 Teile 4,4'-Diisocyanatodicyclohexylmethan,Komponente E, 110 Teile Aceton und 0,5 Teile Dibutylzinndilaurat zugegeben. Im Anschluss wurde das Gemisch bei 60 °C bis zum Erreichen eines NCO-Gehaltes von 0,9 Gew.-% gerührt, auf 40 °C abgekühlt, mit 25 Teilen Dimethylethanolamin neutralisiert und 1400 Teile Wasser unter Rühren zugegeben. Daraufhin wurde eine Mischung aus 7,0 Teilen Ethylendiamin, Komponente F, und 50 Teilen Aceton der Dispersion unter Rühren zugesetzt. Im Anschluss wurde das Aceton unter leichtem Vakuum aus der Dispersion abdestilliert. Man erhielt eine erfindungsgemäße, UV-härtbare, wässrige Polyurethan-Dispersion 7) mit einem Feststoffgehalt von 42 Gew.-%, einer mittleren Teilchengröße von 93 nm und einem pH-Wert von 8,6.

### Beispiel 8:

### Herstellung einer erfindungsgemäßen, UV-härtbaren, wässrigen Polyurethan-Dispersion

927 Teile des Polyesters aus Beispiel 3), Komponente B, wurden bei 65 °C aufgeschmolzen und in 1900 Teilen Aceton gelöst. Anschließend wurden bei 40 °C 2047 Teile 2-Hydroxyethylacrylat, Komponente A, 305 Teile Dimethylolpropionsäure, Komponente D, 2236 Teile 4,4'-Diisocyanatodicyclohexylmethan, Komponente E, und 1,5 Teile Dibutylzinndilaurat zugegeben und die Mischung auf 60 °C unter Rühren aufgeheizt. Es folgte die Zugabe von 2244 Teilen Desmodur^{®} N 3300 (HDI-Trimerisat, Bayer AG, Leverkusen, DE), Komponente E. Nach Erreichen eines NCO-Gehaltes von 0,6 Gew.-% wurde auf 40 °C abgekühlt, und es folgte die Neutralisation mit 173 Teilen Triethylamin. Die klare Lösung wurde unter Rühren in 11350 Teile Wasser eingetragen. Daraufhin wurde eine Mischung aus 35,5 Teilen Ethylendiamin, Komponente F, und 100 Teilen Wasser der Dispersion unter Rühren zugesetzt. Im Anschluss wurde das Aceton unter leichtem Vakuum aus der Dispersion abdestilliert. Man erhielt eine erfindungsgemäße, UV-härtbare, wässrige Polyurethan-Dispersion 8) mit einem Feststoffgehalt von 41 Gew.-%, einer mittleren Teilchengröße von 117 nm und einem pH-Wert von 8,3.

### Beispiel 9:

### Herstellung einer erfindungsgemäßen, UV-härtbaren, wässrigen Polyurethan-Dispersion

298 Teile Pentaerythrittriacrylat, Komponente A, 116 Teile 2-Hydroxyethylacrylat, Komponente A, 1427 Teile einer 80%igen acetonischen Lösung des Polyesters aus Beispiel 2), Komponente B und 134 Teile Dimethylolpropionsäure, Komponente D, wurden in 930 Teilen Aceton gelöst. Es folgte die Zugabe von 269 Teilen Hexamethylendiisocyanat, Komponente E, 269 Teilen Toluol-2,4-diisocyanat, Komponente E, und 0,4 Teilen Zinndi(ethylhexanoat). Anschließend wurde unter Rühren auf 60 °C erwärmt und erst nach Erreichen eines NCO-Gehaltes von 0,9 Gew.-% auf 40 °C abgekühlt. Es folgte die Neutralisation mit 81 Teilen Triethylamin und nach Verdünnung mit weiteren 290 Teilen Aceton die Zugabe von 23,1 Teilen Ethylendiamin, Komponente F. Unter Rühren wurden 2200 Teile Wasser in die klare Lösung eingetragen. Im Anschluss wurde das Aceton unter leichtem Vakuum aus der Dispersion abdestilliert. Man erhielt eine erfindungsgemäße, UV-härtbare, wässrige Polyurethan-Dispersion 9) mit einem Feststoffgehalt von 41 Gew.-%, einer mittleren Teilchengröße von 33 nm und einem pH-Wert von 7,0.

### Beispiel 10:

### Herstellung einer erfindungsgemäßen, UV-härtbaren, wässrigen Polyurethan-Dispersion

Bei 60 °C wurden zu einer Mischung von 2236 Teilen 4,4'-Diisocyanatodicyclohexylmethan, Komponente E, 2244 Teilen Desmodur^{®} N 3300 (HDI-Trimerisat, Bayer AG, Leverkusen, DE), Komponente E und 0,75 Teilen Dibutylzinndilaurat in 1519 Teilen Aceton 1595 Teile 2-Hydroxyethylacrylat, Komponente A, zudosiert und weiter bei 60 °C verrührt bis ein NCO-Gehalt von 8,2 Gew.-% erreicht wurde. Anschließend wurden bei 40 °C 1373 Teile des Polyesters aus Beispiel 1), Komponente B, gelöst in 421 Teilen Aceton, 305 Teile Dimethylolpropionsäure, Komponente D, und 0,75 Teile Dibutylzinndilaurat zugegeben und die Mischung auf 60 °C unter Rühren aufgeheizt. Nach Erreichen eines NCO-Gehaltes von 0,6 Gew.-% wurde auf 40 °C abgekühlt, und es folgte die Neutralisation mit 147 Teilen Triethylamin und die Zugabe von 795 Teilen des Ditrimethylolpropantetraacrylats Ebecryl^{®} 140 (Cytec Surface Specialties SA/NV, Drogenbos, Belgien), Komponente ii. Die klare Lösung wurde unter Rühren in 12860 Teile Wasser eingetragen. Daraufhin wurde eine Mischung aus 43,6 Teilen Ethylendiamin, Komponente F, und 100 Teilen Wasser der Dispersion unter Rühren zugesetzt. Im Anschluss wurde das Aceton unter leichtem Vakuum aus der Dispersion abdestilliert. Man erhielt eine erfindungsgemäße, UV-härtbare, wässrige Polyurethan-Dispersion 10) mit einem Feststoffgehalt von 43 Gew.-%, einer mittleren Teilchengröße von 140 nm und einem pH-Wert von 8,4.

### Beispiel 11:

### Herstellung einer erfindungsgemäßen, UV-härtbaren, wässrigen Polyurethan-Dispersion

Bei 60 °C wurden zu einer Mischung von 2236 Teilen 4,4'-Diisocyanatodicyclohexylmethan, Komponente E, 2244 Teilen Desmodur^{®} N 3300 (HDI-Trimerisat, Bayer AG, Leverkusen, DE), Komponente E und 0,75 Teilen Dibutylzinndilaurat in 1519 Teilen Aceton 1595 Teile 2-Hydroxyethylacrylat, Komponente A, zudosiert und weiter bei 60 °C verrührt bis ein NCO-Gehalt von 8,2 Gew.-% erreicht wurde. Anschließend wurden bei 40 °C 1373 Teile des Polyesters aus Beispiel 1), Komponente B, gelöst in 421 Teilen Aceton, 305 Teile Dimethylolpropionsäure, Komponente D, und 0,75 Teile Dibutylzinndilaurat zugegeben und die Mischung auf 60 °C unter Rühren aufgeheizt. Nach Erreichen eines NCO-Gehaltes von 0,1 Gew.-% wurde auf 40 °C abgekühlt, und es folgte die Neutralisation mit 147 Teilen Triethylamin. Die klare Lösung wurde unter Rühren in 11350 Teile Wasser eingetragen. Im Anschluss wurde das Aceton unter leichtem Vakuum aus der Dispersion abdestilliert. Man erhielt eine erfindungsgemäße, UV-härtbare, wässrige Polyurethan-Dispersion 11) mit einem Feststoffgehalt von 40 Gew.-%, einer mittleren Teilchengröße von 93 nm und einem pH-Wert von 8,2.

### Beispiel 12:

### Herstellung einer nicht erfindungsgemäßen, UTV-härtbaren, wässrigen Polyurethan-Dispersion

1362 Teile des Polyesters aus Beispiel 4), Komponente B, wurden bei 65 °C aufgeschmolzen und in 2000 Teilen Aceton gelöst. Anschließend wurden bei 40 °C 2047 Teile 2-Hydroxyethylacrylat, Komponente A, 305 Teile Dimethylolpropionsäure, Komponente D, 2236 Teile 4,4'-Diisocyanatodicyclohexylmethan, Komponente E, und 1,5 Teile Dibutylzinndilaurat zugegeben und die Mischung auf 60 °C unter Rühren aufgeheizt. Es folgte die Zugabe von 2244 Teilen Desmodur^{®} N 3300 (HDI-Trimerisat, Bayer AG, Leverkusen, DE), Komponente E. Nach Erreichen eines NCO-Gehaltes von 0,6 Gew.-% wurde auf 40 °C abgekühlt, und es folgte die Neutralisation mit 173 Teilen Triethylamin. Die klare Lösung wurde unter Rühren in 12000 Teile Wasser eingetragen. Daraufhin wurde eine Mischung aus 35,5 Teilen Ethylendiamin, Komponente F, und 100 Teilen Wasser der Dispersion unter Rühren zugesetzt. Im Anschluss wurde das Aceton unter leichtem Vakuum aus der Dispersion abdestilliert. Man erhielt eine UV-härtbare, wässrige Polyurethan-Dispersion 12) mit einem Feststoffgehalt von 35 Gew.-%, einer mittleren Teilchengröße von 74 nm und einem pH-Wert von 8,5.

### Beispiel 13:

### Herstellung der Polyurethandispersion 1 aus EP-A 704469

47,7 Teile des Polyesters aus Beispiel 5), 54,6 Teile 2-Hydroxyethylacrylat, 22,7 Teile 1,4-Butandiol, 0,2 Teile p-Methoxyphenol, 0,6 Teile 2,6-Di-tert-butyl-p-cresol und 0,14 Teile Dibutylzinndilaurat wurden in 116 Teilen Aceton gelöst und auf 60 °C aufgeheizt. Unter Rühren wurde eine Mischung von 111 Teilen Isophorondiisocyanat und Desmodur^{®} N 3300 (HDI-Trimerisat, Bayer AG, Leverkusen DE) über 2 Stunden zudosiert. Nach anderthalb Stunden wurde der theoretische NCO-Gehalt von 1,75 Gew.-% erreicht, 43,5 Teile einer 40%igen wässrigen PUD-Salzlösung über 10 Minuten zugegeben, nach weiteren 20 Minuten 329 Teile Wasser zugegeben und das Aceton unter leichtem Vakuum aus der Dispersion abdestilliert. Man erhielt eine UV-härtbare, wässrige Polyurethan-Dispersion 13) gemäß EP-A 704469 mit einem Feststoffgehalt von 36 Gew.-%, einer mittleren Teilchengröße von 104 nm und einem pH-Wert von 8,2.

**Tabelle 1: Formulierungen für pigmentierte Systeme**

| | **Pigmentierte Lacke [A-1] und [A-2] (Gewichtsteile)** | **Klarlack [A-3] (Gewichtsteile)** |
|---|---|---|
| **UV-Dispersion (angepasst auf 40% Festkörper)** | 122,00 | 150 |
| **Butylglykol / Wasser (1:1)** | 10,00 | 12 |
| **Silikonoberflächenadditiv BYK^{®} 373¹** | 0,20 | - |
| **Benetzungsmittel BYK^{®} 346²** | 0,40 | 0,3 |
| **Irgacure^{®} 500³** | 2,00 | 1,5 |
| **Irgacure^{®} 819 DW⁴** | 2,00 | - |
| **Entschäumer Dehydran 1293⁵** | 1,00 | |
| **TiO₂-Paste Apuis 0062⁶** | 49,00 | - |
| **Verdickungsmittel BYK^{®} 425⁷** | 2,00 | 0,4 |
| **Wasser** | 11,40 | - |
| **Gesamt** | 200,00 | 164,2 |

| | | |
|---|---|---|
| Erläuterungen zu den Fußnoten siehe Tabelle 2. | | |

**Tabelle 2: Applikations- und Härtungsbedingungen für pigmentierte Systeme**

| | **Pigmentierte Lacke [A-1]** | **Pigmentierte Lacke [A-2]** | **Klarlack [A-3]** |
|---|---|---|---|
| **Substrat** | Holz | Glas | Glas |
| **Auftrag durch Rakeln** | Kastenrakel, 2 x 150 µm, Nassfilm | Kastenrakel, 1 x 150 µm, Nassfilm | Kastenrakel, 1 x 150 µm, Nassfilm |
| **Entlüftungszeit** | 10 min, 50 °C | 10 min, 50 °C | 10 min, 50 °C |
| **Härtung** | 3 m/min (Ga + Hg)⁸ | 3, 5 m/min⁹ (Ga + Hg)⁸ | 3, 5 m/min⁹ (Hg)⁸ |

| | | | |
|---|---|---|---|
| ¹ Lösung eines polyethermodifizierten, hydroxyfunktionellen Polydimethylsiloxans der Fa. BYK, Wesel, DE ² Lösung eines polyethermodifizierten Polydimethylsiloxans der Fa. BYK, Wesel, DE ³ eine Mischung von Benzophenon und (1-Hydroxycyclohexyl)phenylketon der Fa. Ciba, Lampertheim, DE ⁴ Phenylbis-(2,4,6-trimethylbenzoyl)-phosphinoxid der Fa. Ciba, Lampertheim, DE ⁵ Modifiziertes Polydimethylsiloxan der Fa. Cognis, Düsseldorf, DE ⁶ Pigmentpaste der Fa. Heubach, Langelsheim, DE ⁷ Lösung eines hamstoffmodifizierten Polyurethans der Fa. BYK, Wesel, DE ⁸ UV-Anlage der Fa. Barberán, Model HOK - 6/2 (ca. 80 W/cm) ⁹ Zum Test der Reaktivität wird die nach der Aushärtung erzielte Härte in Pendelsekunden (nach DIN 53157) in Abhängigkeit von verschiedenen Bandlaufgeschwindigkeiten gemessen. Bleibt die Pendelhärte auch bei höchster Bandgeschwindigkeit bei Werten über 100 Pendelsekunden, so besitzt die Beschichtung eine ausgezeichnete Reaktivität. | | | |

Nach der UV-Härtung werden die beschichteten Substrate gelagert (Holz 1 d bei 50 °C bzw. Glas 1 h bei Raumtemperatur im Exikator) und anschließend den Prüfungen unterzogen.

**Tabelle 3: Daten zur anwendungstechnischen Prüfung pigmentierter Systeme**

| **Anwendungstechnische Prüfung** | **Beispiel 6** | **Beispiel 7** | **Beispiel 8** | **Beispiel 9** | **Beispiel 10** | **Beispiel 12** | **Beispiel 13 (**EP-A 704 469**)** |
|---|---|---|---|---|---|---|---|
| **Filmtransparenz¹⁰, Klarlack [A-3]** | 4 | 5 | 2 | 4 | 3 | 4 | 5 |
| **Lagerstabilität: 50 °C/24 h** | OK | OK | OK | OK | OK | OK | OK |
| **Lagerstabilität: 40 °C/28 d** | OK | OK | OK | OK | OK | OK | OK |
| **Wasserfestigkeit**¹¹, **pigmentierter Lack [A-1]** | 5 | 5 | 5 | 5 | 5 | 5 | 5 |
| **Kaffeebeständigkeit¹¹, pigmentierter Lack [A-1]** | 5 | 4-5 | 3 | 5 | 5 | 2-3 | 3 |
| **Ethanol/Wasser(50%)-Beständigkeit,¹¹ pigmentierter Lack [A-1]** | 5 | 5 | 4-5 | 5 | 5 | 5 | 4 |
| **Rotweinbeständigkeit¹¹, pigmentierter Lack [A-1]** | 5 | 4-5 | 4 | 5 | 5 | 3 | 3 |
| **Ethanolbeständigkeit(98%)¹¹ pigmentierter Lack [A-1]** 1 | 5 | 5 | 4-5 | 4 | 5 | 4-5 | 4 |
| **Pendelhärte nach König, Klarlack [A-3] nach phk. Trocknung** | 64 sec | 64 sec | 17 sec | 116 sec | 45 sec | klebrig | 31 sec |
| **Pendelhärte nach König, Klarlack [A-3] nach UV-Härtung** | 200 sec, 190 sec | 148 sec, 146 sec | 174 sec, 162 sec | 220 sec, 219 sec | 210 sec, 205 sec | 193 sec, 188 sec | 158 sec, 153 sec |
| **Pendelhärte nach König, pigmentierter Lack [A-2]** | 150 sec, 143 sec | 188 sec, 185 sec | 109 sec, 88 sec | 199 sec, 196 sec | 172 sec, 169 sec | 118 sec, 69 sec | 132 sec, 109 sec |
| **Weissanlaufen nach Verkratzen,¹² Klarlack [A-3]** | 5 | 5 | 5 | 4 | 4 | 5 | 3 |

| | | | | | | | |
|---|---|---|---|---|---|---|---|
| ¹⁰ Die Filmtransparenz wird durch Aufziehen eines Filmes auf einer Glasplatte und anschließender physikalischer Trocknung visuell beurteilt: Note 5: klar, keine Trübung oder Schleierbildung erkennbar Note 4: bei einem Betrachtungswinkel von ca. 10-20 ° ist eine leichte Schleierbildung erkennbar Note 3: bei einem Betrachtungswinkel von ca. 45-80 ° ist eine leichte Trübung erkennbar Note 2: deutliche Trübung Note 1: matte Oberfläche bzw. griesige Oberfläche ¹¹ Die Beständigkeitseigenschaften werden nach 16 Stunden Belastung durch optische Inaugenscheinnahme beurteilt: Note 5: Keine sichtbaren Veränderungen (keine Beschädigung). Note 4: Leichte Glanz- oder Farbtonveränderung, nur sichtbar, wenn sich die Lichtquelle in der Prüfoberfläche auf oder dicht neben der Markierung spiegelt und direkt zum Auge des Betrachters reflektiert wird, oder einige eben erkennbare, abgegrenzte Markierungen (Quellungsring erkennbar, bzw. keine Erweichung mit dem Fingernagel erkennbar). Note 3: Leichte Markierung aus mehreren Blickwinkeln zu sehen, zum Beispiel ein eben erkennbarer fast völliger Kreis oder Kreisfläche (Quellungsring erkennbar, Kratzspuren des Fingernagels erkennbar) Note 2: Starke Markierung, die Oberflächenstruktur ist jedoch weitgehend unverändert. (geschlossener Quellungsring, Kratzspuren feststellbar). Note 1: Starke Markierung, die Oberflächenstruktur ist jedoch weitgehend unverändert, Markierung ist bis zum Untergrund durchkratzbar Note 0: Starke Markierung, die Oberflächenstruktur ist verändert oder das Oberflächenmaterial ist ganz oder teilweise zerstört oder das Filterpapier haftet an der Oberfläche. ¹² Das Weissanlaufen nach Verkratzung wird durch Verkratzen mittels einer Münze geprüft. Ist an der Verkratzungsstelle keinerlei Weissanlaufen erkennbar, dann wird dieses Ergebnis als exzellent beurteilt (Note 5). | | | | | | | |

**Tabelle 4: Formulierungen für Klarlack-Systeme**

| | **Klarlack [A-4, A-5] (Gewichtsteile)** |
|---|---|
| **UV-Dispersion (angepasst auf 40% Festkörper)** | 150 |
| **Butylglykol** / **Wasser (1:1)** | 12 |
| **Irgacure^{®} 500³** | 1,5 |
| **Benetzungsmittel BYK^{®} 346²** | 0,3 |
| **Verdickungsmittel BYK^{®} 425⁷** | 0,4 |
| **Gesamt** | 164,2 |

| | |
|---|---|
| Erläuterungen zu den Fußnoten siehe Tabelle 2. | |

**Tabelle 5: Applikations- und Härtungsbedingungen für Klarlack-Systeme**

| | **Klarlack [A-4]** | **Klarlack [A-5]** |
|---|---|---|
| **Substrat** | Holz | Glas |
| **Auftrag durch Rakeln** | Kastenrakel, 1 x 150 µm, Nassfilm | Kastenrakel, 1 x 150 µm, Nassfilm |
| **Entlüftungszeit** | 10 min, 50 °C | 10 min, 50 °C |
| **Härtung** | 3,5 m/min⁹ (Hg)⁸ | 3,5 m/min⁹ (Hg)⁸ |

| | | |
|---|---|---|
| Erläuterungen zu den Fußnoten siehe Tabelle 2. | | |

Nach der UV-Härtung werden die beschichteten Substrate gelagert (Glas 1 h bei Raumtemperatur im Exikator) und anschließend den Prüfungen unterzogen.

**Tabelle 6: Daten zur anwendungstechnischen Prüfung von Klarlacksystemen**

| **Anwendungstechnische Prüfung** | **Beispiel 6** | **Beispiel 13 (**EP-A 704 469**)** |
|---|---|---|
| **Filmtransparenz¹⁰, Klarlack [A-5]** | 5 | 5 |
| **Lagerstabilität: 50 °C/24 h** | OK | OK |
| **Lagerstabilität: 40 °C/28 d** | OK | OK |
| **Wasserfestigkeit¹¹, Klarlack [A-4]** | 5 | 5 |
| **Kaffeebeständigkeit¹¹, Klarlack [A-4]** | 5 | 5 |
| **Ethanol/Wasser(50%)-Beständigkeit,¹¹ Klarlack [A-4]** | 5 | 4 |
| **Rotweinbeständigkeit¹¹, Klarlack [A-4]** | 5 | 5 |
| **Ethanolbeständigkeit(98%)¹¹, Klarlack [A-4]** | 5 | 3 |
| **Pendelhärte nach König, Klarlack [A-5] nach phk. Trocknung** | 64 sec | 31 sec |
| **Pendelhärte nach König, Klarlack [A-5] nach UV-Härtung** | 189 sec, 180 sec | 158 sec, 153 sec |
| **Weissanlaufen nach Verkratzen, Klarlack¹², [A-5]** | 5 | 3 |

| | | |
|---|---|---|
| Erläuterungen zu den Fußnoten siehe Tabelle 3. | | |

In der pigmentierten Formulierung zeigen die erfindungsgemäßen Beispiele 6) bis 10) im Vergleich zum nicht erfindungsgemäßen Beispiel 12) und dem Vergleichsbeispiel 13) deutlich bessere Fleckenbeständigkeiten gegen Kaffee und Rotwein sowie eine bessere Beständigkeit gegen Ethanol. Zudem werden für die Beispiele 6) bis 10) sehr ausgeprägte physikalische Antrocknungen und hohe Pendelhärten nach Strahlenhärtung erreicht. Das nicht erfindungsgemäße Beispiel 12) zeigt deutlich, dass sowohl der Rückgang in Pendelhärten nach physikalischer Trocknung und nach Strahlenhärtung sowie die schlechteren Beständigkeiten gegen Kaffee, Rotwein und Ethanol auf den aliphatische Disäuren-enthaltenden, flexibilisierenden Polyester aus Beispiel 4) zurückzuführen sind.

Beispiel 8), eine erfindungsgemäße, UV-härtbare Polyurethandispersion auf Basis eines Phthalsäurehaltigen Polyesters, schneidet in der pigmentierten Formulierung bei den Beständigkeiten gegen Kaffee, Rotwein und Ethanol noch gut aber im Vergleich zu den Beispielen, 6), 7), 9) und 10) etwas schlechter ab. Hierauf begründet sich die besondere Bevorzugung von Isophtalsäure- und / oder Terephthalsäure-haltigen Polyestern für die erfindungsgemäßen Systeme.

In der Klarlack-Formulierung ist Beispiel 6) dem Vergleichsbeispiel 13) in den Beständigkeiten gegen Ethanol überlegen. Es werden zudem sowohl nach physikalischer Trocknung als auch nach Strahlenhärtung höhere Pendelhärten erreicht, ohne dass beim Weisanlaufen nach Verkratzung schlechtere Werte erhalten werden.

## Patentansprüche

1. Strahlenhärtbare, wässrige Dispersionen auf Basis von Polyurethanacrylaten (i) enthaltend als Aufbaukomponenten
A) eine oder mehrere Verbindungen monohydroxyfunktioneller, (Meth)acrylatgruppen-haltiger Alkohole,
B) Polyesterpolyole bestehend aus
B1) aliphatischen Diolen mit 2 bis 4 Kohlenstoffatomen zwischen den beiden OH-Funktionen und / oder aliphatischen Triolen und
B2) aromatischen Di- und / oder Tricarbonsäuren,
C) gegebenenfalls von A und B verschiedene Polyole,
D) eine oder mehrere Verbindungen mit mindestens einer gegenüber Isocyanat reaktiven Gruppe und zusätzlich nichtionische, ionische oder zur Ausbildung von ionischen Gruppen befähigte Gruppen, die für die Polyurethandispersion dispergierend wirken,
E) organische Polyisocyanate,
F) gegebenenfalls von A bis D verschiedene Verbindungen mit mindestens einer gegenüber Isocyanat reaktiven Gruppe.

2. Strahlenhärtbare, wässrige Dispersionen auf Basis von Polyurethanacrylaten (i) gemäß Anspruch 1, enthaltend zusätzlich eine Komponente ii, wobei es sich um Reaktiwerdünner, die mindestens eine radikalisch polymerisierbare Gruppe aufweisen, handelt.

3. Strahlenhärtbare, wässrige Dispersionen auf Basis von Polyurethanacrylaten gemäß Anspruch 1 oder 2, **dadurch gekennzeichnet, dass** Aufbaukomponente B zu 5-75 Gew.-% eingesetzt wird, wobei sich die Komponenten A bis F zu 100 Gew.-% addieren.

4. Strahlenhärtbare, wässrige Dispersionen auf Basis von Polyurethanacrylaten gemäß einem der Ansprüche 1 bis 3, **dadurch gekennzeichnet, dass** Aufbaukomponente B eine OH-Zahl von 20-500 mg KOH/g Substanz aufweist.

5. Strahlenhärtbare, wässrige Dispersionen auf Basis von Polyurethanacrylaten gemäß einem der Ansprüche 1 bis 4, **dadurch gekennzeichnet, dass** als Aufbaukomponente A 2-Hydroxy-ethyl(meth)acrylat, 2-Hydroxypropyl(meth)acrylat, Pentaerythrittriacrylat, Dipentaerythritpentaacrylat, das Additionsprodukt aus Ethylmethylheptansäure-glycidylester mit (Meth)acrylsäure und / oder deren technischen Gemischen eingesetzt werden.

6. Strahlenhärtbare, wässrige Dispersionen auf Basis von Polyurethanacrylaten gemäß einem der Ansprüche 1 bis 5, **dadurch gekennzeichnet, dass** als Komponente B1 1,2-Ethandiol, 1,2-Propandiol, 1,3-Propandiol, Neopentylglykol, 2-Ethyl-2-butylpropandiol, 1,3-Butandiol, 1,2- und 1,4-Cyclohexandiol, 1,4-Butandiol, Trimethylolethan, Trimethylolpropan, Trimethylolbutan, Glycerin und / oder Rizinusöl und als Komponente B2 Phthalsäure, Phthalsäureanhydrid, Isophthalsäure, Terephthalsäure, Trimellithsäure, die Anhydride der genannten Säuren und / oder Gemische der genannten Verbindungen eingesetzt werden.

7. Strahlenhärtbare, wässrige Dispersionen auf Basis von Polyurethanacrylaten gemäß einem der Ansprüche 1 bis 6, **dadurch gekennzeichnet, dass** als Komponente B1 1,2-Ethandiol, 1,2-Propandiol, Neopentylglykol und / oder Trimethylolpropan und als Komponente B2 Isophthalsäure und / oder Terephthalsäure eingesetzt werden.

8. Strahlenhärtbare, wässrige Dispersionen auf Basis von Polyurethanacrylaten gemäß einem der Ansprüche 1 bis 7, **dadurch gekennzeichnet, dass** als Komponente D 2-(2-Amino-ethylamino-)ethansulfonsäure, 3-(Cyclohexylamino)propan-1-sulfonsäure, das Additionsprodukt von Isophorondiamin und Acrylsäure, Hydroxypivalinsäure, Dimethylolpropionsäure, Triethanolamin, Tripropanolamin, N-Methyldiethanolamin, N,N-Dimethylethanolamin, monofunktionelle gemischte Polyalkylenoxidpolyether, die ≥ 40 mol-% Ethylenoxid- und ≤ 60 mol-% Propylenoxideinheiten aufweisen und / oder Gemische der genannten Verbindungen eingesetzt werden.

9. Strahlenhärtbare, wässrige Dispersionen auf Basis von Polyurethanacrylaten gemäß einem der Ansprüche 1 bis 8, **dadurch gekennzeichnet, dass** als Komponente E 1,6-Hexamethylendiisocyanat, 1-Isocyanato-3,3,5-trimethyl-5-isocyanatomethylcyclohexan (Isophorondiisocyanat oder IPDI), 4,4'-Diisocyanato-dicyclohexylmethan, deren Mischungen untereinander, Homologe bzw. Oligomere von 1-Isocyanato-3,3,5-trimethyl-5-isocyanatomethylcyclohexan (Isophorondiisocyanat oder IPDI) und 4,4'-Diisocyanato-dicyclohexylmethan mit Biuret-, Carbodiimid-, Isocyanurat-, Allophanat-, Iminooxadiazindion- und / oder Uretdiongruppen, Mischungen dieser Homologen bzw. Oligomeren untereinander, oder Mischungen dieser Homologen bzw. Oligomeren mit den zuvor aufgeführten Polyisocyanaten eingesetzt werden.

10. Verfahren zur Herstellung der strahlenhärtbaren, wässrigen Dispersionen auf Basis von Polyurethanacrylaten (i) gemäß einem der Ansprüche 1 bis 9, **dadurch gekennzeichnet, dass** durch Umsetzen der Komponenten A-D in einem oder mehreren Reaktionsschritten mit Komponente E ein Polyurethanacrylatprepolymer (i) erhalten wird, wobei ein Neutralisationsmittel zur Erzeugung der für die Dispergierung notwendigen ionischen Gruppen vor, während oder nach der Prepolymerherstellung zugegeben werden kann, gefolgt von einem Dispergierschritt durch Zugabe von Wasser zum Prepolymer bzw. Überführen des Prepolymers in eine wässrige Vorlage, wobei vor, während oder nach der Dispergierung eine Kettenverlängerung mittels Komponente F erfolgen kann.

11. Verfahren zur Herstellung der strahlenhärtbaren, wässrigen Dispersionen auf Basis von Polyurethanacrylaten (i) gemäß Anspruch 10, **dadurch gekennzeichnet, dass** die molaren Verhältnisse von Iscocyanatgruppen in (E) zu gegenüber Isocyanaten reaktiven Gruppen in (A), (B), (C) und (D) von 0,8 : 1 bis 2,5 : 1 betragen.

12. Verfahren gemäß Anspruch 10 oder 11, **dadurch gekennzeichnet, dass** als weitere Komponente ein oder mehrere Reaktivverdünner mit mindestens einer radikalisch polymerisierbaren Gruppe (Komponente ii) beigemischt werden.

13. Verwendung der strahlenhärtbaren, wässrigen Dispersionen gemäß einem der Ansprüche 1 bis 9, zur Herstellung von Beschichtungen, Lacken oder Klebstoffen.

14. Beschichtungsmittel enthaltend die erfindungsgemäßen strahlenhärtbaren, wässrigen Dispersionen gemäß einem der Ansprüche 1 bis 9, auf Polyurethanacrylatbasis, sowie Vernetzer auf Basis von Aminoharzen, blockierten Polyisocyanaten, nicht blockierten Polyisocyanaten, Polyaziridinen und / oder Polycarbodiimiden, und / oder ein oder mehrere weitere Dispersionen.

15. Substrate beschichtet mit Beschichtungsmitteln gemäß Anspruch 14.

## Claims

1. Radiation-curable, aqueous dispersions based on polyurethane acrylates (i) comprising as synthesis components
A) one or more compounds of monohydroxy-functional, (meth)acrylate-group-containing alcohols,
B) polyester polyols consisting of
B1) aliphatic diols having 2 to 4 carbon atoms between the two OH functions and/or aliphatic triols and
B2) aromatic dicarboxylic and/or tricarboxylic acids,
C) optionally polyols different from A and B,
D) one or more compounds having at least one isocyanate-reactive group and additionally nonionic groups, ionic groups or groups capable of forming ionic groups, these groups having a dispersing activity for the polyurethane dispersion,
E) organic polyisocyanates,
F) optionally compounds different from A to D, having at least one isocyanate-reactive group.

2. Radiation-curable, aqueous dispersions based on polyurethane acrylates (i) according to Claim 1, further comprising a component ii, which comprises reactive diluents containing at least one free-radically polymerizable group.

3. Radiation-curable, aqueous dispersions based on polyurethane acrylates according to Claim 1 or 2, **characterized in that** synthesis component B is used at 5% to 75% by weight, with components A to F adding up to 100% by weight.

4. Radiation-curable, aqueous dispersions based on polyurethane acrylates according to any of Claims 1 to 3, **characterized in that** synthesis component B has an OH number of 20 to 500 mg KOH/g substance.

5. Radiation-curable, aqueous dispersions based on polyurethane acrylates according to any of Claims 1 to 4, **characterized in that** use is made as synthesis component A of 2-hydroxyethyl (meth)acrylate, 2-hydroxypropyl (meth)acrylate, pentaerythritol triacrylate, dipentaerythritol pentaacrylate, the adduct of glycidyl ethylmethylhepanoate with (meth)acrylic acid, and/or technical mixtures thereof.

6. Radiation-curable, aqueous dispersions based on polyurethane acrylates, according to any of Claims 1 to 5, **characterized in that** use is made as component B1 of 1,2-ethanediol, 1,2-propanediol, 1,3-propanediol, neopentyl glycol, 2-ethyl-2-butylpropanediol, 1,3-butanediol, 1,2-and 1,4-cyclohexanediol, 1,4-butanediol, trimethylolethane, trimethylol-propane, trimethylolbutane, glyercol and/or castor oil and use is made as component B2 of phthalic acid, phthalic anhydride, isophthalic acid, terephthalic acid, trimellitic acid, the anhydrides of the stated acids and/or mixtures of the stated compounds.

7. Radiation-curable, aqueous dispersions based on polyurethane acrylates, according to any of Claims 1 to 6, **characterized in that** use is made as component B1 of 1,2-ethanediol, 1,2-propanediol, neopentyl glycol and/or trimethylolpropane, and use is made as component B2 of isophthalic acid and/or terephthalic acid.

8. Radiation-curable, aqueous dispersions based on polyurethane acrylates, according to any of Claims 1 to 7, **characterized in that** use is made as component D of 2-(2-aminoethylamino)ethane-sulphonic acid, 3-(cyclohexylamino)propane-1-sulphonic acid, the addition product of isophoronediamine and acrylic acid, hydroxypivalic acid, dimethylolpropionic acid, triethanolamine, tripropapolamine, N-methyldiethanolamine, N,N-dimethylethanolamine, monofunctional mixed polyalkylene oxide polyethers containing ≥ 40 mol% ethylene oxide units and ≤ 60 mol% of propylene oxide units, and/or mixtures of the stated compounds.

9. Radiation-curable, aqueous dispersions based on polyurethane acrylates according to any of Claims 1 to 8, **characterized in that** use is made as component E of hexamethylene 1,6-diisocyanate, 1-isocyanato-3,3,5-trimethyl-5-isocyanatomethyl-cyclohexane (isophorone diisocyanate or IPDI), 4,4'-diisocyanatodicyclohexylmethane, mixtures thereof with one another, homologues and/or oligomers of 1-isocyanato-3,3,5-trimethyl-5-isocyanatomethylcyclohexane (isophorone diisocyanate or IPDI) and 4,4'-diisocyanatodicyclohexylmethane with biuret, carbodiimide, isocyanurate, allophanate, iminooxadiazinedione and/or uretdione groups, mixtures of these homologues and/or oligomers with one another, or mixtures of these homologues and/or oligomers with the polyisocyanates recited above.

10. Process for preparing the radiation-curable, aqueous dispersions based on polyurethane acrylates (i) according to any of Claims 1 to 9, **characterized in that** a polyurethane acrylate prepolymer (i) is obtained by reacting components A-D in one or more reaction steps with component E, it being possible to add a neutralizing agent for generating the ionic groups necessary for dispersing, before, during or after the preparation of the prepolymer, followed by a dispersing step by adding water to the prepolymer or transferring the prepolymer to an aqueous reservoir, it being possible for chain extension to take place by means of component F before, during or after dispersing.

11. Process for preparing the radiation-curable, aqueous dispersions based on polyurethane acrylates (i) according to Claim 10, **characterized in that** the molar ratios of isocyanate groups in (E) to isocyanate-reactive groups in (A), (B), (C) and (D) are from 0.8 : 1 to 2.5 : 1.

12. Process according to Claim 10 or 11, **characterized in that** one or more reactive diluents having at least one free-radically polymerizable group (component ii) are admixed as a further component.

13. Use of the radiation-curable, aqueous dispersions according to any of Claims 1 to 9 for producing coatings, paints or adhesives.

14. Coating compositions comprising the radiation-curable, aqueous dispersions according to any of Claims 1 to 9, based on polyurethane acrylate, and also crosslinkers based on amino resins, blocked polyisocyanates, non-blocked polyisocyanates, polyaziridines and/or polycarbodiimides, and/or one or more further dispersions.

15. Substrates coated with coating compositions according to Claim 14.

## Revendications

1. Dispersions aqueuses durcissables par rayonnement à base d'acrylates de polyuréthane (i) contenant en tant que composants constitutifs
A) un ou plusieurs composés d'alcools à fonctionnalité monohydroxy et contenant des groupes (méth)acrylates,
B) des polyester-polyols comprenant
B1) des diols aliphatiques contenant 2 à 4 atomes de carbone entre les deux fonctions OH et/ou des triols aliphatiques, et
B2) des acides di- et/ou tricarboxyliques aromatiques,
C) éventuellement des polyols différents de A et B,
D) un ou plusieurs composés contenant au moins un groupe réactif avec les isocyanates et également des groupes non ioniques, ioniques ou aptes à la formation de groupes ioniques, qui ont une action dispersante pour la dispersion de polyuréthane,
E) des polyisocyanates organiques,
F) éventuellement des composés différents de A à D contenant au moins un groupe réactif avec les isocyanates.

2. Dispersions aqueuses durcissables par rayonnement à base d'acrylates de polyuréthane (i) selon la revendication 1, contenant également un composant ii, celui-ci consistant en des diluants réactifs qui comprennent au moins un groupe polymérisable par voie radicalaire.

3. Dispersions aqueuses durcissables par rayonnement à base d'acrylates de polyuréthane selon la revendication 1 ou 2, **caractérisées en ce que** le composant constitutif B est utilisé à hauteur de 5 à 75 % en poids, les composants A à F totalisant 100 % en poids.

4. Dispersions aqueuses durcissables par rayonnement à base d'acrylates de polyuréthane selon l'une quelconque des revendications 1 à 3, **caractérisées en ce que** le composant constitutif B présente un indice OH de 20 à 500 mg KOH/g de substance.

5. Dispersions aqueuses durcissables par rayonnement à base d'acrylates de polyuréthane selon l'une quelconque des revendications 1 à 4, **caractérisées en ce que** le (méth)acrylate de 2-hydroxyéthyl, le (méth)acrylate de 2-hydroxypropyl, le triacrylate de pentaérythritol, le pentaacrylate de dipentaérythritol, le produits d'addition de l'ester de glycidyle d'acide éthylméthylheptanoïque avec l'acide (méth)acrylique et/ou leurs mélanges industriels sont utilisés en tant que composant constitutif A.

6. Dispersions aqueuses durcissables par rayonnement à base d'acrylates de polyuréthane selon l'une quelconque des revendications 1 à 5, **caractérisées en ce que** le 1,2-éthane-diol, le 1,2-propane-diol, le 1,3-propane-diol, le néopentylglycol, le 2-éthyl-2-butylpropane-diol, le 1,3-butane-diol, le 1,2- et 1,4-cyclohexane-diol, le 1,4-butane-diol, le triméthyloléthane, le triméthylolpropane, le triméthylolbutane, la glycérine et/ou l'huile de ricin sont utilisés en tant que composant B1 et l'acide phtalique, l'anhydride de l'acide phtalique, l'acide isophtalique, l'acide téréphtalique, l'acide triméllitique, les anhydrides des acides mentionnés et/ou des mélanges des composés mentionnés sont utilisés en tant que composant B2.

7. Dispersions aqueuses durcissables par rayonnement à base d'acrylates de polyuréthane selon l'une quelconque des revendications 1 à 6, **caractérisées en ce que** le 1,2-éthane-diol, le 1,2-propane-diol, le néopentylglycol et/ou le triméthylolpropane sont utilisés en tant que composant B1 et l'acide isophtalique et/ou l'acide téréphtalique sont utilisés en tant que composant B2.

8. Dispersions aqueuses durcissables par rayonnement à base d'acrylates de polyuréthane selon l'une quelconque des revendications 1 à 7, **caractérisées en ce que** l'acide 2-(2-aminoéthylamino)éthane-sulfonique, l'acide 3-(cyclohexylamino)propane-1-sulfonique, le produit d'addition d'isophorone-diamine et d'acide acrylique, l'acide hydroxypivalique, l'acide diméthylolpropionique, la triéthanolamine, la tripropanolamine, la N-méthyldiéthanolamine, la N,N-diméthyléthanolamine, les polyéthers d'oxydes de polyalkylène monofonctionnels mixtes qui comprennent ≥ 40 % en moles d'unités oxyde d'éthylène et ≤ 60 % en moles d'unités oxyde de propylène et/ou des mélanges des composés mentionnés sont utilisés en tant que composant D.

9. Dispersions aqueuses durcissables par rayonnement à base d'acrylates de polyuréthane selon l'une quelconque des revendications 1 à 8, **caractérisées en ce que** le diisocyanate de 1,6-hexaméthylène, le 1-isocyanato-3,3,5-triméthyl-5-isocyanatométhylcyclohexane (diisocyanate d'isophorone ou IPDI), le 4,4'-diisocyanato-dicyclohexylméthane, leurs mélanges les uns avec les autres, les homologues ou oligomères de 1-isocyanato-3,3,5-triméthyl-5-isocyanatométhylcyclohexane (diisocyanate d'isophorone ou IPDI) et de 4,4'-diisocyanato-dicyclohexylméthane contenant des groupes biuret, carbodiimide, isocyanurate, allophanate, iminooxadiazine-dione et/ou uretdione, des mélanges de ces homologues ou oligomères les uns avec les autres, ou des mélanges de ces homologues ou oligomères avec les polyisocyanates listés précédemment sont utilisés en tant que composant E.

10. Procédé de fabrication de dispersions aqueuses durcissables par rayonnement à base d'acrylates de polyuréthane (i) selon l'une quelconque des revendications 1 à 9, **caractérisé en ce qu'**un prépolymère d'acrylate de polyuréthane (i) est obtenu par mise en réaction des composants A à D dans une ou plusieurs étapes de réaction avec le composant E, un agent de neutralisation pouvant être ajouté avant, pendant ou après la fabrication du prépolymère pour former les groupes ioniques nécessaires pour la dispersion, suivie par une étape de dispersion par ajout d'eau au prépolymère ou transfert du prépolymère dans une préparation aqueuse, un allongement des chaînes au moyen du composant F pouvant avoir lieu avant, pendant ou après la dispersion.

11. Procédé de fabrication des dispersions aqueuses durcissables par rayonnement à base d'acrylates de polyuréthane (i) selon la revendication 10, **caractérisé en ce que** les rapports molaires entre les groupes isocyanate dans (E) et les groupes réactifs avec les isocyanates dans (A), (B), (C) et (D) est de 0,8:1 à 2,5:1.

12. Procédé selon la revendication 10 ou 11, **caractérisé en ce qu'**un ou plusieurs diluants réactifs contenant au moins un groupe polymérisable par voie radicalaire (composant ii) sont incorporés en tant que composant supplémentaire.

13. Utilisation des dispersions aqueuses durcissables par rayonnement selon l'une quelconque des revendications 1 à 9 pour la fabrication de revêtements, de laques ou d'adhésifs.

14. Agent de revêtement contenant les dispersions aqueuses durcissables par rayonnement selon l'une quelconque des revendications 1 à 9 à base d'acrylates de polyuréthane, ainsi que des agents de réticulation à base de résines amino, de polyisocyanates bloqués, de polyisocyanates non bloqués, de polyaziridines et/ou de polycarbodiimides, et/ou une ou plusieurs dispersions supplémentaires.

15. Substrats revêtus avec des agents de revêtement selon la revendication 14.
